# EUROPÄISCHE PATENTSCHRIFT

(11) **EP 1 807 616 B1**
(45) Veröffentlichungstag und Bekanntmachung des Hinweises auf die Patenterteilung: **27.05.2015**
(21) Anmeldenummer: 05806861.0
(22) Anmeldetag: 28.10.2005
(51) Int. Cl.: F02C 7/045, F02K 1/82

(54) **AKUSTISCHER ABSORBER FÜR FLUGTRIEBWERKE**
ACOUSTIC ABSORBER FOR AIRCRAFT ENGINES
ABSORBANT ACOUSTIQUE POUR GROUPES MOTOPROPULSEURS

(30) Priorität: 02.11.2004 DE 102004053383
(43) Veröffentlichungstag der Anmeldung: 18.07.2007
(73) Patentinhaber: Airbus SAS, 31707 Blagnac Cedex (FR)
(72) Erfinder: PEIFFER, Alexander, 81667 München (DE); MAIER, Rudolf, 83714 Miesbach (DE)
(74) Vertreter: Santarelli
(86) Internationale Anmeldenummer: PCT/DE2005/001936
(87) Internationale Veröffentlichungsnummer: WO 2006/047991

(56) Entgegenhaltungen:
- EP-A- 0 314 261
- WO-A2-2004/043685
- DE-A1- 19 606 195
- US-A- 3 542 152
- US-A- 3 734 234
- US-A- 4 197 341
- US-A- 4 632 862
- US-A- 5 028 474
- US-A- 5 431 980

## Beschreibung

Die vorliegende Erfindung betrifft einen akustischen Absorber, der insbesondere für Triebwerke von Flugzeugen geeignet ist und eine wabenartig geformte, 3-dimensionale Struktur aufweist, die beim Einsatz in einem Triebwerk Lärm des Triebwerks absorbiert. Weiterhin betrifft die Erfindung eine besondere Verwendung von Faltwaben.

Triebwerke allgemein und insbesondere Triebwerke von Flugzeugen haben das Problem einer starken Geräuschentwicklung. Insbesondere bei Triebwerken mit großem Nebenstromverhältnis findet eine starke Geräuschentwicklung im Triebwerkseinlauf statt. Durch Blattspitzengeschwindigkeiten oberhalb von Mach1 werden z. B. Schockwellen erzeugt, die zur Anregung von akustischen Eigenmoden im Einlaufkanal führen. Diese Moden strahlen sehr effektiv nach außen ab und führen zu einem sehr lauten Geräusch. Dieser Lärm, der auch "buzz-saw-noise" genannt wird, wird während der Startphase eines Flugzeugs in der Umgebung des Flughafens besonders stark wahrgenommen. Der Lärm dringt aber auch in die Passagierkabine des Flugzeuges selbst und wird von den Passagieren besonders in der vorderen Sektion wahrgenommen. Weitere Lärmanteile treten bei der Blattfolgefrequenz des Bläsers bzw. Fans sowie deren Harmonischen auf und Breitbandlärm sowie Anteile aus anderen Triebwerksstufen wie z. B. Verdichter, sind ebenfalls zu berücksichtigen.

Um dieses Geräusch im Einlauf- oder Nebenstromkanal von Triebwerken zu bekämpfen, werden üblicherweise absorbierende Flächen als passive Schallabsorber im Bereich des Triebwerkeinlaufs angebracht. Dabei werden vorwiegend sogenannte "single degree of freedom" bzw. SDOF-Absorber eingesetzt, die im wesentlichen aus einer Honigwabenstruktur bestehen, die mit einem Lochblech oder einem feinmaschigen Drahtgeflecht abgedeckt sind. Die Honigwabenstruktur wirkt als Resonator, wobei die Bautiefe der Honigwabenstruktur an die Wellenlänge angepasst ist und ein Viertel der Wellenlänge beträgt. Derartige SDOF-Absorber sind daher besonders wirksam bei dieser Resonanzfrequenz.

Um eine breitbandigere Dämpfung von Lärm zu ermöglichen, wurden Absorber entwickelt, die aus zwei oder drei hintereinander geschalteten SDOF-Absorbern bestehen. Derartige Absorber werden auch 2-DOF-Absorber bzw. 3-DOF-Absorber genannt. Weiterhin wurde versucht, Absorber verschiedener Bautiefe parallel zu schalten.

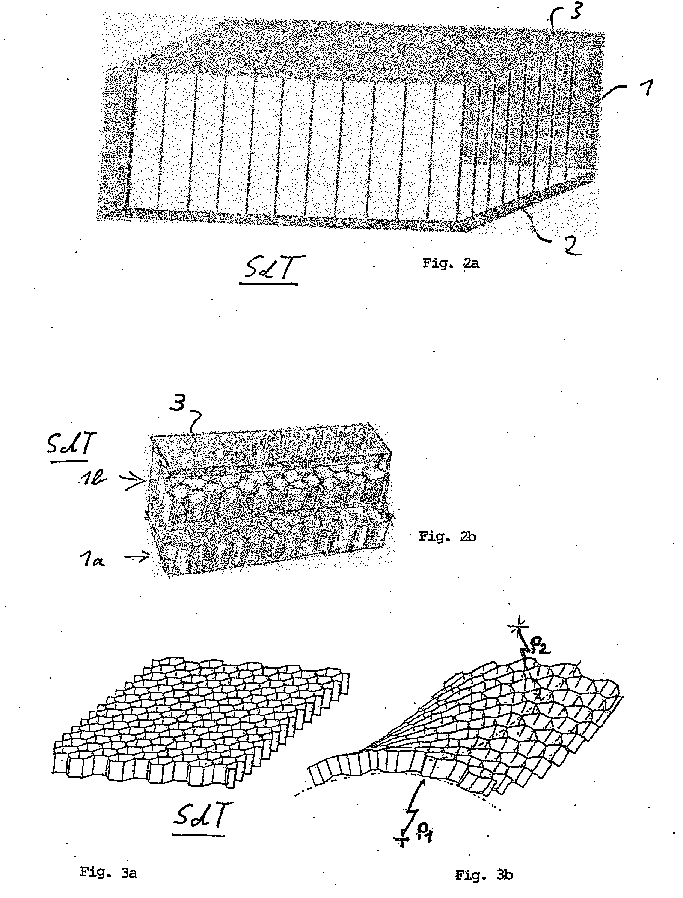

Zur Veranschaulichung zeigt Fig. 2a einen bekannten SDOF-Absorber mit einer Vielzahl von Honigwaben 1, die zwischen einer unteren Decklage 2 und einer oberen Decklage 3 angeordnet sind. Fig. 2b zeigt einen bekannten 2-DOF-Absorber mit zwei übereinander liegenden Schichten von Honigwaben 1a, 1b unter der Decklage 3.

Bei den bekannten Absorbern besteht das Problem, dass großflächige, gekrümmte Strukturen nur auf sehr komplizierte Weise gefertigt werden können, was mit hohen Kosten verbunden ist. Derzeitige Honigwabenkern-Absorber in Triebwerken haben den besonderen Nachteil, dass sie nicht die gesamte Fläche des Einlaufs bedecken. Eine Ursache hierfür ist der sogenannte Satteleffekt, der dazu führt, dass die Honigwaben nicht beliebig gekrümmt werden können. Daher wird die effektive Fläche nicht ausgenutzt und der Lärm im Triebwerkseinlauf kann nicht ausreichend absorbiert bzw. reduziert werden.

Zur Veranschaulichung zeigen die Figuren 3a und 3b den Satteleffekt. Beim Versuch, die eben ausgebildete Honigwabenstruktur gemäß Figur 3a zu krümmen, entsteht aufgrund der Geometrie der Waben eine sattelartige Struktur mit einem ersten bzw. inneren Krümmungsradius p1 und einem zweiten Krümmungsradius p2, der eine sattelartige Vertiefung der Wabenstruktur bildet.

Zusätzlich besteht das Problem, dass die Honigwaben nicht miteinander verzahnt werden können, was eine nahtlose Fertigung weiter erschwert. Weiterhin können die Honigwaben aufgrund ihres Fertigungsverfahrens nicht präzise positioniert werden, wodurch z.B. notwendige Perforationslöcher in vielen Fällen überdeckt werden. Das gilt insbesondere für MDOF-Absorber (MDOF = multiple degree of freedom) mit mehreren Freiheitsgraden, die eine sehr genaue Positionierung der Zwischenlagen erfordern. D.h., die übereinanderliegenden Schichten von Honigwaben müssen besonders genau positioniert werden. Bei dieser Art von Absorbern kommt der oben erwähnte Satteleffekt besonders zum Tragen, da dieser eine seitliche Verschiebung der jeweiligen Wabe zu den Deck- und Zwischenlagen bewirkt.

Bisher müssen MDOF-Absorber immer durch Sandwich-Konstruktionen mit mehreren Kernen hergestellt werden. Dadurch entstehen erhöhte Kosten und es ist eine sehr präzise Ausrichtung der Waben zu den perforierten Zwischenlagen erforderlich. Hinzu kommt, dass Honigwaben auf eine feste Zellgröße festgelegt sind. D.h., es lassen sich keine Absorberstrukturen mit variablen Volumina realisieren.

Das Dokument EP-0 314 261 offenbart einen akustischen Absorber mit einer Honigwabenanordnung, die eine Innenwand, eine Außenwand, die von der Innenwand beabstandet ist, um einen zwischen den Wänden angeordneten Raum zu bilden und eine Mehrzahl von gewellten Streifen, welche miteinander verschweißt sind und direkt an wenigstens der Innenwand befestigt sind, um Unterteilungen der Honigwabenanordnung zu bilden, besitzt.

Das Dokument US-3,542,152 offenbart einen akustischen Absorber für Triebwerke mit einer Innenwand, einer Außenwand und dazwischen Zellen, die mit dem Luftstrom des Triebwerkes durch Öffnungen in Verbindung sind.

Das Dokument US-5,028,474 offenbart eine wabenartig geformten 3-dimensionalen Struktur, wobei die Struktur Faltwaben umfasst, die durch Faltung eines ebenen Halbzeuges gebildet sind.

Das Dokument WO2004/043685 offenbart ein Verfahren zur Herstellung einer Kernstruktur für einen Kernverbund, wobei die Kernstruktur aus einem dünnen faltbaren Ausgangsmaterial mit einer Undefinierten Länge, hergestellt wird.

Es ist die Aufgabe der vorliegenden Erfindung, einen akustischen Absorber zu schaffen, mit dem der Satteleffekt bei der Bildung von großflächigen, gekrümmten Strukturen vermieden wird. Der Absorber soll insbesondere für Triebwerke von Flugzeugen geeignet sein und vor allem in Triebwerkseinläufen eine hohe Präzision für die Absorberelemente ermöglichen.

Diese Aufgabe wird gelöst durch den akustischen Absorber gemäß Patentanspruch 1. Weitere vorteilhafte Merkmale, Aspekte und Details der Erfindung ergeben sich aus den abhängigen Ansprüchen, der Beschreibung und den Zeichnungen.

Der erfindungsgemäße akustische Absorber ist insbesondere für Triebwerke von Flugzeugen geeignet und hat eine wabenartig geformte 3-dimensionale Struktur, die beim Einsatz in einem Triebwerk Lärm des Triebwerks absorbiert, wobei die Struktur Faltwaben umfasst, die durch Faltung eines ebenen Halbzeuges gebildet sind, und darüberhinaus die weiteren Merkmale aus Anspruch 1 aufweist.

Durch die Verwendung von Faltwaben, die durch Faltung eines ebenen Halbzeuges entstehen, können großflächige gekrümmte Strukturen als Absorber bzw. Absorberelemente gefertigt werden, wobei der Satteleffekt aufgrund der Geometrie der Faltungen vermieden wird. Insbesondere können Faltwaben aufgrund ihrer Konstruktionseigenschaften von vornherein auf gekrümmte 3-dimensionale Geometrien eingestellt werden. Durch die Faltung entstehen z.B. 3-dimensionale Kernstrukturen, die sich durch verschiedene Faltmuster beliebig einstellen lassen. Der fehlende Satteleffekt ermöglicht zudem eine genaue Positionierung des Kerns zu den Decklagen des Absorbers. Einzelne Absorberelemente, die aus Faltwaben gebildet sind, können problemlos miteinander verzahnt werden, was zu einer erhöhten Präzision führt.

Die aus den Faltwaben gebildete Struktur ist eine 3-dimensionale Kernstruktur mit einem vorgegebenen Faltmuster. Durch verschiedenartige Faltmuster können beliebige Krümmungen des fertigen Absorbers bzw. Absorberelements erzielt werden. Dadurch kann eine exakte Anpassung und Positionierung vor allem in Triebwerken von Flugzeugen und insbesondere in den Triebwerkseinläufen erfolgen, die eine verbesserte Lärmabsorption zur Folge hat.

Vorteilhafterweise überlappen sich mehrere der wabenartigen Strukturen gegenseitig. Sie können aber auch ineinander verzahnt sein. Dadurch wird eine höhere Präzision bei der Positionierung der Absorberelemente erzielt.

Bevorzugt umfasst der akustische Absorber ein oder mehrere perforierte Flächen, wobei die perforierten Flächen aus Teilflächen des ebenen Halbzeuges gebildet sind. Dadurch wird der Aufwand bei der Herstellung noch weiter reduziert und damit die Kosten gesenkt. Gleichzeitig befinden sich die perforierten Flächen an den exakt vorgegebenen Positionen des Absorbers.

Bevorzugt hat der akustische Absorber zwei räumlich voneinander getrennte Volumenbereiche, die durch die Faltwaben gebildet sind und auf unterschiedlichen bzw. entgegengesetzten Seiten des Absorbers ausgestaltet sind. D.h., dass z.B. Faltwaben-Kerne aufgrund ihrer grundlegenden Eigenschaften den Zwischenraum, der durch sie gebildet wird, in zwei Volumenbereiche teilen, wobei z.B. ein Volumenbereich an eine obere und ein anderer Volumenbereich an eine untere Decklage angrenzt. Dadurch können insbesondere mehrdimensionale Absorber, wie z.B. 2-DOF-Absorber, besonders einfach und kostengünstig gefertigt werden. Die Perforation und die Positionierung der mittleren Schicht, die bei bisherigen MDOF-Absorbern notwendig ist, entfallen. Statt dessen kann die Perforation auf die Flächen des ungefalteten ebenen Halbzeuges aufgebracht werden, d.h. vor der Faltung und Bildung der Faltwaben. Dadurch wird ein sehr exaktes und variables Design von 2-DOF-Absorbern bzw. 2-DOF-Systemen ermöglicht.

Die Faltwaben weisen ein oder mehrere vorgegebene Faltgeometrien auf, die an den Umfang und an die Einlauftiefe des jeweiligen Triebwerks angepasst oder anpassbar sind. D.h., durch die unterschiedlichen Faltgeometrien ist es möglich, die Volumengröße und -tiefe der Faltwaben über den Umfang und Einlauftiefe zu variieren. Dadurch wird eine noch weitere Flexibilität in der Auslegung des Absorbers erreicht.

Aufgrund der Möglichkeit, bestimmte Faltmuster einzustellen bzw. zu wählen, aus denen die Faltwaben gebildet werden, sind z.B. auch belüftbare Kernstrukturen oder eine Kopplung benachbarter Kammern möglich.

Zusätzlich ist es mit den Faltwaben möglich, getrennt hergestellte Wabenstrukturen zu überlappen und einfach ineinander zu verzahnen, wodurch eine annähernd nahtlose Konstruktion ermöglicht wird.

Gemäß einem Aspekt der Erfindung werden Faltwaben, die durch Faltung eines ebenen Halbzeugs gebildet sind, als akustisches Absorberelement, insbesondere für Triebwerke von Flugzeugen, verwendet. Dabei sind die Faltwaben vorteilhafterweise in ihrer Geometrie derart ausgelegt, dass sie zur Absorption von Triebwerkslärm von Flugzeugen geeignet sind. Die Faltwaben werden insbesondere zur Bildung bzw. Herstellung eines erfindungsgemäßen akustischen Absorbers verwendet.

Vorteile und Merkmale, die im Zusammenhang mit dem erfindungsgemäßen akustischen Absorber genannt sind, gelten auch für die besondere Verwendung von Faltwaben gemäß der vorliegenden Erfindung.

Nachfolgend wird die Erfindung beispielhaft anhand der Figuren erläutert, in denen
- **Fig. 1**: eine Ansicht eines akustischen Absorbers gemäß einer bevorzugten Ausführungsform der Erfindung zeigt, der als gekrümmter Kern ausgestaltet ist;
- **Fig. 2a und b**: einen SDOF-Absorber und einen 2-DOF-Absorber gemäß dem Stand der Technik zeigen;
- **Fig. 3a und b**: eine Ansicht einer Honigwabenstruktur eines bekannten akustischen Absorbers im ebenen Zustand (Fig. 3a) und im gekrümmten Zustand (Fig. 3b) zur Darstellung des Satteleffektes zeigt;
- **Fig. 4**: ein ebenes Faltmuster zur Bildung des in Fig. 1 gezeigten Kerns zeigt;
- **Fig. 5**: eine Ansicht eines Faltmusters auf einem ebenen Halbzeug mit perforierten Teilflächen zeigt, aus dem der erfindungsgemäße akustische Absorber gebildet wird; und
- **Fig. 6**: einen Absorber mit einer Schicht von Faltwaben in einer Schnittansicht zeigt.

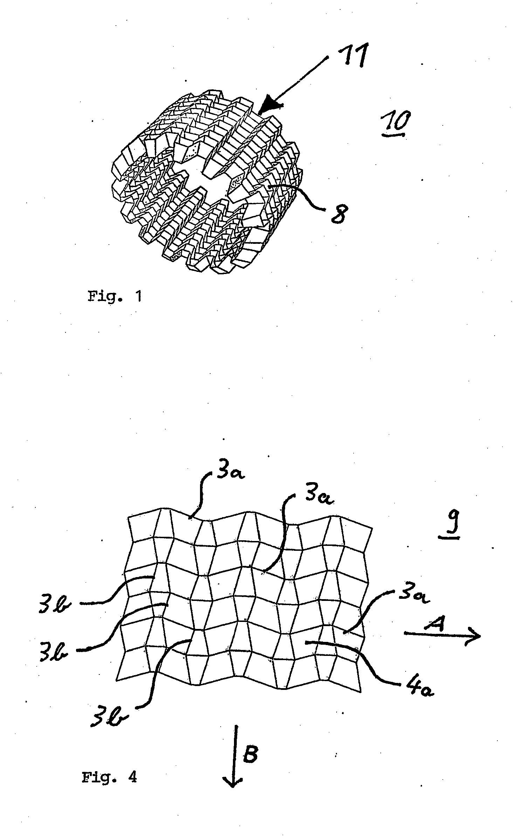

In Fig. 1 ist ein akustischer Absorber 10 als bevorzugte Ausführungsform der Erfindung dargestellt. Der akustische Absorber 10 weist eine wabenartig geformte, 3-dimensionale Struktur 11 auf. Die Wabenstruktur 11 bildet einen gekrümmten Kern, dessen Form zum Einsatz im Einlauf von Triebwerken ausgestaltet ist. Zu diesem Zweck ist die wabenartige 3-dimensionale Struktur 11 derart gekrümmt, dass sie einen Ring bildet. D.h., die Wandung des Ringes besteht aus der 3-dimensionalen Wabenstruktur 11.

Die Struktur bzw. Wabenstruktur 11 umfasst eine Vielzahl von Faltwaben 8, die durch Faltung eines ebenen Halbzeuges gebildet sind.

In Fig. 4 ist ein ebenes Halbzeug 9 dargestellt, aus dem die Faltwaben 8 des Absorbers 11 (s. Fig. 1) durch Faltung gebildet sind. Das Halbzeug 9 hat zu diesem Zweck ein definiertes geeignetes Faltmuster, das aus einer Vielzahl von Faltlinien 3a, 3b besteht, die zickzackartig in zwei im wesentlichen senkrecht zueinander gerichteten Hauptrichtungen A, B verlaufen. Die Faltlinien 3a entlang der Hauptrichtung A und die Faltlinien 3b entlang der Hauptrichtung B verlaufen dabei jeweils im wesentlichen parallel zueinander. Durch den Verlauf der Faltlinien 3a, 3b werden in dem ebenen bzw. 2-dimensionalen Halbzeug 9 geometrische Muster in Form von Trapezen gebildet, die sich regelmäßig wiederholen. Dabei sind die Muster 4a derart gestaltet, dass sich bei einer geeigneten Faltung des ebenen Halbzeugs 9 entlang der Faltlinien 3a, 3b die Faltwaben 8 (siehe Fig. 1) bilden. D.h., dass aufgrund des definierten geometrischen Faltmusters durch Haltung des ebenen bzw. 2-dimensionalen Halbzeuges eine 3-dimensionale Wabenstruktur mit Faltwaben entsteht, die zunächst plattenartig ausgestaltet ist und eine Dicke aufweist, die durch die Größe der einzelnen Faltwaben 8 bzw. Wabenelemente definiert ist.

Die Faltwaben 8 des in Fig. 1 gezeigten Kerns wirken als Resonatoren für die zu absorbierenden Schallwellen und sind dementsprechend in ihrer Größe und Geometrie entsprechend den jeweiligen Anforderungen ausgestaltet.

Die Fertigung von Faltwaben durch Faltung ist als solche bekannt und beispielsweise in dem US-Patent Nr. 2,950,656 und in dem US-Patent Nr. 5,947,885 im Detail beschrieben. Erfindungsgemäß wird dieses Verfahren zur Bildung des akustischen Absorbers 10 ohne Satteleffekt verwendet.

Zur Bildung der Faltwaben 8 wird ein flaches, dünnes Material mit Falzen in verschiedenen Richtungen versehen, die aus einer Vielzahl von zickzackartigen Faltlinien gebildet sind. Die einzelnen Flächenelemente der Faltwaben können beispielsweise Parallelogramme, Trapeze, Dreiecke, usw. sein, oder eine Kombination verschiedenartiger geometrischer Formen.

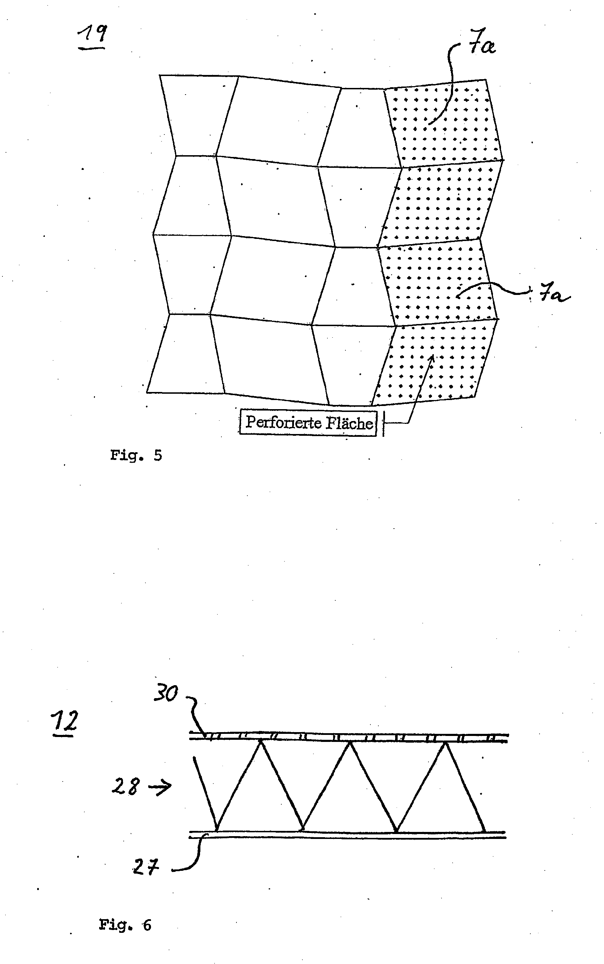

Fig. 5 zeigt ein ebenes Halbzeug 19, bei dem Teilflächen 7a perforiert sind. Hinsichtlich der weiteren Merkmale entspricht das ebene Halbzeug 19 dem ebenen Halbzeug 9 (siehe Fig. 4), das oben bereits beschrieben ist. Durch die Perforation der Teilflächen 7a wird die Herstellung der Absorberelemente noch weiter vereinfacht und es werden die bekannten Probleme bei der Positionierung vermieden.

Nach der Faltung der in den Figuren 4 und 5 gezeigten ebenen Halbzeuge 9 bzw. 19 entstehen 3-dimensionale Wabenstrukturen, die plattenartig geformt sind und eine Plattendicke aufweisen, die durch die Größe der einzelnen Faltwaben definiert ist. Die Wabenstrukturen werden anschließend gekrümmt, so dass sie an eine vorgegebene 3-dimensional geformte Fläche angepasst sind. Bei der Krümmung der Faltwaben, z.B. zur Bildung des in Fig. 1 gezeigten ringartigen Kerns, entstehen aufgrund der besonderen Wabengeometrie keine unerwünschten Spannungen, so dass der bekannte Satteleffekt vermieden wird. Die einzelnen Falze, die durch die Faltlinien 3a, 3b in dem ebenen Halbzeug 9, 19 vorgegeben sind, sind flexibel und erlauben eine Anpassung der Faltwinkel, wenn die 3-dimensionale Wabenstruktur 11 gekrümmt wird. D.h., die einzelnen Faltwaben 8 (s. Fig. 1) sind aufgrund ihrer Herstellung durch Faltung des ebenen Halbzeugs 9, 19 nicht starr, sondern flexibel und erlauben eine Anpassung der Winkel zwischen einzelnen Wandelementen der Faltwaben 8.

Je nach den Erfordernissen des Einzelfalls werden die beispielsweise gekrümmten Wabenstrukturen 11 zum Beispiel mit ein oder mehreren Decklagen versehen, die z.B. perforiert sind und beidseitig der Wabenstruktur 11 angeordnet sein können. Bei der Gestaltung des Absorbers mit Faltwaben können verschiedene Wabenstrukturen 11 hergestellt werden und überlappend oder ineinander verzahnt angeordnet werden, um in Größe und Geometrie beliebige Absorber, insbesondere für Flugzeugtriebwerke, zu bilden.

Es können mehrere Wabenstrukturen, die z.B. aus dem Halbzeug 19 mit den perforierten Teilflächen 7a gebildet sind, übereinander angeordnet werden, wobei keine zusätzliche mittlere Schicht mit Perforationen notwendig ist, da die Perforationen bereits auf den Teilflächen 7a des noch ungefalteten Halbzeuges 9 aufgebracht sind. Dadurch entsteht ein breitbandig wirkender 2-DOF-Absorber, der relativ kostengünstig und exakt herstellbar ist. Die Größe der Volumen der einzelnen Faltwaben 8 und deren Ausdehnung bzw. Tiefe wird durch die jeweiligen Faltgeometrien bestimmt und kann über die Einlauftiefe des Triebwerks und über den Umfang variiert werden. Dadurch wird eine besonders wirksame Schallabsorption im Triebwerk mit einer erhöhten Bandbreite erzielt.

Fig. 6 zeigt einen Schnitt durch einen Absorber 12 mit einer Wabenstruktur aus Faltwaben 28, die zwischen einer Rücklage 27 und einer perforierten Decklage 30 angeordnet ist. Die Faltwaben 28 sind wie oben beschrieben aus dem Halbzeug durch Faltung gebildet. In der Wabenstruktur ergeben sich durch die Ausgestaltung der Faltwaben zwei voneinander getrennte Volumenbereiche, so dass mit nur einer Wabenstrukturschicht ein 2-DOF-Absorber vorliegt.

Mehrere Absorber 12 können zur Bildung mehrdimensionaler Absorber, zum Beispiel 4-DOF-, 6-DOF-, 8-DOF-Absorber usw., übereinander gestapelt werden, wobei die Wabenstruktur-Schichten jeweils durch eine perforierte Schicht 30 voneinander getrennt sind.

Durch die vorgegebenen Perforationen, die bereits im ebenen Halbzeug 19 vorgesehen sind, kann gezielt und auf einfache Weise eine Kopplung benachbarter Kammern bzw. Faltwaben 8 bzw. 27, 28 erreicht werden. Weiterhin sind durch die Faltung der perforierten Halbzeuge z.B. auch belüftete Kernstrukturen möglich, d.h., es werden wabenartige 3-dimensionale Strukturen 11 geschaffen, bei denen gezielt einzelne Bereiche bzw. Waben durch Perforationen miteinander gekoppelt bzw. belüftet sind.

## Patentansprüche

1. Akustischer Absorber für Triebwerke von Flugzeugen, mit einer wabenartig geformten 3-dimensionalen Struktur (11; 12), die beim Einsatz in einem Triebwerk Lärm des Triebwerkes absorbiert, wobei die Struktur (11; 12) Faltwaben (8; 28) umfasst, die durch Faltung eines ebenen Halbzeuges (9; 19) gebildet sind, und wobei die 3-dimensionale Struktur aus einem einzigen Halbzeug gebildet wird, und wobei das Halbzeug (9, 19) aus einer Vielzahl von ebenen, in zwei Hauptrichtungen (A, B) aneinander angrenzenden Flächenelementen (4a, 7a) besteht, die mittels Faltlinien (3a, 3b) gegeneinander abgegrenzt sind, und durch Faltung entlang der Faltlinien (3a, 3b) eine großflächige Wabenstruktur mit einer Vielzahl von hintereinander liegenden Wabenreihen gebildet ist,
**dadurch gekennzeichnet, dass** die Größe der Volumen der einzelnen Faltwaben und deren Ausdehnung durch die jeweiligen Faltgeometrien bestimmt wird und über die Einlauftiefe des Triebwerks und den Umfang variiert wird.

2. Akustischer Absorber nach Anspruch 1, **dadurch gekennzeichnet, dass** ein erster Satz Faltlinien (3a) in einer Hauptrichtung (A) abschnittsweise zueinander parallel verlaufen und ein zweiter Satz Faltlinien (3b) in einer zweiten Hauptrichtung (B) zickzackartig verlaufen.

3. Akustischer Absorber nach Anspruch 1, **dadurch gekennzeichnet, dass** die Flächenelemente (4a, 7a) Parallelogramme, Trapeze und/oder Dreiecke sind.

4. Akustischer Absorber nach einem der vorhergehenden Ansprüche, **dadurch gekennzeichnet, dass** sich mehrere der wabenartigen Strukturen (11 ; 12) gegenseitig überlappen und/oder ineinander verzahnt sind.

5. Akustischer Absorber nach einem der vorhergehenden Ansprüche, **gekennzeichnet durch** ein oder mehrere perforierte Flächen (30), die aus Teilflächen (7a) des ebenen Halbzeuges (19) gebildet sind.

6. Akustischer Absorber nach einem der vorhergehenden Ansprüche, **gekennzeichnet durch** mindestens zwei räumlich getrennte Volumenbereiche, die **durch** die Faltwaben (8; 28) gebildet und auf unterschiedlichen Seiten des Absorbers ausgestaltet sind.

7. Akustischer Absorber nach Anspruch 6, **gekennzeichnet durch** eine obere und/oder eine untere Decklage (30), an die jeweils einer der Volumenbereiche angrenzt.

## Claims

1. Acoustic absorber for aircraft engines, having a honeycomb-shaped three-dimensional structure (11; 12) which when employed in an engine absorbs the noise of the engine, wherein the structure (11; 12) comprises folded honeycombs (8; 28) which are formed by folding a planar semifinished product (9; 19), and wherein the three-dimensional structure is formed from a single semifinished product, and wherein the semifinished product (9, 19) is composed of a multiplicity of planar surface elements (4a, 7a) which adjoin one another in two main directions (A, B) and which are delimited in relation to one another by means of fold lines (3a, 3b), and a large-area honeycomb structure having a multiplicity of honeycomb rows lying behind one another is formed by way of folding along the fold lines (3a, 3b), **characterized in that** the size of the volumes of the individual folded honeycombs, and the extent thereof, is determined by the respective folding geometries and varies across the inlet depth of the engine and the circumference.

2. Acoustic absorber according to Claim 1, **characterized in that** a first set of fold lines (3a) in a main direction (A) run parallel with one another in portions, and a second set of fold lines (3b) in a second main direction (B) run in a zigzag manner.

3. Acoustic absorber according to Claim 1, **characterized in that** the surface elements (4a, 7a) are parallelograms, trapeziums, and/or triangles.

4. Acoustic absorber according to one of the preceding claims, **characterized in that** a plurality of the honeycomb-like structures (11; 12) mutually overlap and/or mesh with one another.

5. Acoustic absorber according to one of the preceding claims, **characterized by** one or a plurality of perforated surfaces (30) which are formed from part-surfaces (7a) of the planar semifinished product (19).

6. Acoustic absorber according to one of the preceding claims, **characterized by** at least two volume regions which are spatially separated and which are formed by the folded honeycombs (8; 28) and are configured on different sides of the absorber.

7. Acoustic absorber according to Claim 6, **characterized by** an upper and/or a lower covering layer (30) which are/is adjoined in each case by one of the volume regions.

## Revendications

1. Absorbeur acoustique pour groupes motopropulseurs d'avions, avec une structure tridimensionnelle (11; 12) formée à la manière de nid d'abeilles qui, lorsqu'elle est utilisée dans un groupe motopropulseur, absorbe le bruit du groupe motopropulseur, dans lequel la structure (11; 12) comprend des alvéoles de pliage (8; 28) qui sont formées par pliage d'un demi-produit plan (9; 19), et dans lequel la structure tridimensionnelle est formée à partir d'un unique demi-produit, et dans lequel le demi-produit (9, 19) se compose d'une multiplicité d'éléments de surface plans (4a, 7a) adjacents les uns aux autres dans deux directions principales (A, B), qui sont délimités les uns par rapport aux autres au moyen de lignes de pliage (3a, 3b), et une structure en nid d'abeilles de grande surface avec une multiplicité de rangées d'alvéoles situées l'une derrière l'autre est formée par pliage le long des lignes de pliage (3a, 3b), **caractérisé en ce que** la grandeur des volumes des alvéoles de pliage individuelles et de leur extension est déterminée par les géométries de pliage respectives et est modifiée par la profondeur d'introduction dans le groupe motopropulseur et le périmètre.

2. Absorbeur acoustique selon la revendication 1, **caractérisé en ce qu'**un premier ensemble de lignes de pliage (3a) s'étendent parallèlement les unes aux autres par segments dans une direction principale (A) et un deuxième ensemble de lignes de pliage (3b) s'étendent en zigzag dans une deuxième direction principale (B).

3. Absorbeur acoustique selon la revendication 1, **caractérisé en ce que** les éléments de surface (4a, 7a) sont des parallélogrammes, des trapèzes et/ou des triangles.

4. Absorbeur acoustique selon l'une quelconque des revendications précédentes, **caractérisé en ce que** plusieurs des structures en nid d'abeilles (11; 12) se chevauchent mutuellement et/ou s'imbriquent les unes dans les autres.

5. Absorbeur acoustique selon l'une quelconque des revendications précédentes, **caractérisé par** une ou plusieurs faces perforées (30), qui sont formées à partir de faces partielles (7a) du demi-produit plan (19).

6. Absorbeur acoustique selon l'une quelconque des revendications précédentes, **caractérisé par** au moins deux régions volumiques spatialement séparées, qui sont formées par les alvéoles de pliage (8; 28) et sont configurées sur des côtés différents de l'absorbeur.

7. Absorbeur acoustique selon la revendication 6, **caractérisé par** une couche de recouvrement supérieure et/ou inférieure (30), à laquelle se relie respectivement une des régions volumiques.
